Europäisches Patentamt

European Patent Office

Office européen des brevets

(11) Publication number: **0 067 620**
**B1**

## (12) EUROPEAN PATENT SPECIFICATION

(45) Date of publication of patent specification: **12.02.86**

(51) Int. Cl.⁴: **H 02 H 9/08**

(21) Application number: **82302840.2**

(22) Date of filing: **02.06.82**

(54) **Secondary arc extinction device.**

(30) Priority: **05.06.81 JP 86486/81**

(43) Date of publication of application:
**22.12.82 Bulletin 82/51**

(45) Publication of the grant of the patent:
**12.02.86 Bulletin 86/07**

(84) Designated Contracting States:
**CH DE GB LI SE**

(56) References cited:
**DE-A-2 710 625**
**US-A-1 784 682**
**US-A-2 050 082**
**US-A-2 824 978**

**Soviet Inventions Illustrated, Week C 30 3**
**September 1980, Section X13, Abstract of**
**SU-A-702447**

(73) Proprietor: **Kabushiki Kaisha Toshiba**
**72, Horikawa-cho Saiwai-ku**
**Kawasaki-shi Kanagawa-ken 210 (JP)**

(72) Inventor: **Saguchi, Junichi c/o Patent Division**
**Tokyo Shibaura Denki K.K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

EP 0 067 620 B1

## Description

This invention relates to a multiphase transmission line having means for extinguishing a secondary arc between one phase of the line and earth.

In a multiphase transmission line, a flashover can occur between one of the transmission lines and earth, such a flashover being referred to as a secondary arc. Such a flashover is particularly likely to occur in conditions when lightening is liable to occur. Although the transmission line has a circuit breaker at each end of each phase, and these breakers are opened to isolate the line in an attempt to extinguish the arc, the arc is continued to be fed from other phases of the line due to the electrostatic coupling which exists between the conductors of the transmission line.

The problem of secondary arc extinction exists with power transmission systems at the voltage rating as used at present, but it will become an even greater problem in the future when UHV power transmission systems are employed.

When the circuit breakers at the ends of one or more phases of a transmission line are opened, it can affect the stability of the whole system and, clearly, it is desirable that the circuit breakers should be reclosed and the current flow through the line re-established as soon as possible. On the other hand, it is necessary to ensure that the secondary arc is fully extinguished before reclosing the breakers.

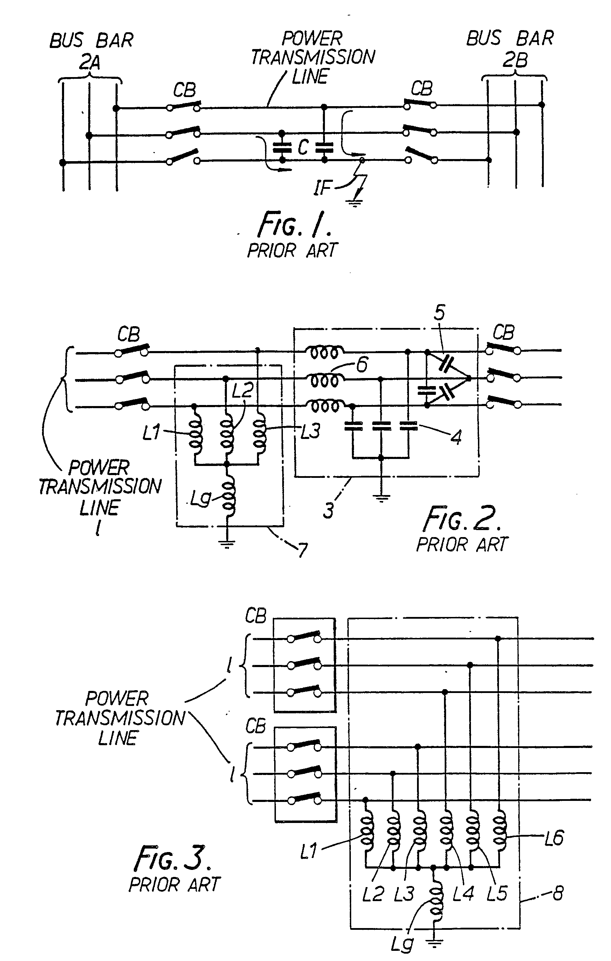

Figure 1 shows a conventional electric power transmission line with a flashover to earth from one of the phases. In Figure 1, two three phase bus bars 2A, 2B are interconnected by a three phase transmission line. At each end of the line, there is a circuit breaker CB in each phase. C is the distributed electrostatic capacitance that exists between the phase from which the flashover has occurred and the unaffected phases of the transmission line, and IF is the secondary arc which occurs due to the supply of induced current at the point where the fault occurs, from the uninterrupted phases. Thus, a fault between one phase and earth sets up a secondary arc which is not removed simply by opening the circuit breakers at the ends of that phase.

It has been suggested to provide a reactor which serves to cancel the electrostatic capacity between the lines of a high voltage transmission system in order to extinguish the arc.

In Figure 2, reference numeral 3 indicates the line impedance consisting of the line inductance 6, the distributed electrostatic capacity 5 which exists between the phases and the distributed electrostatic capacity 4 which exists between each phase and earth. Reference numeral 7 indicates an arc extinction reactor which is connected in the line. This reactor 7 is constructed by connecting one end of reactors $L_1$, $L_2$, $L_3$ to respective phases

of the transmission line and connecting their other ends together. A neutral point reactor $L_g$ is connected between the common point of the reactors and earth.

The function of the arc extinguisher may be explained as follows:—

The admittance matrix determined by the distributed electrostatic capacity of the transmission line is expressed by equation (1)

$$Y_C = \begin{bmatrix} Y_{C11} & -Y_{C21} & -Y_{C31} \\ -Y_{C12} & Y_{C22} & -Y_{C32} \\ -Y_{C13} & -Y_{C23} & Y_{C33} \end{bmatrix} \quad (1)$$

The admittance matrix of the arc extinguisher is expressed by equation (2)

$$Y_L = \begin{bmatrix} Y_{L11} & -Y_{L21} & -Y_{L31} \\ -Y_{L12} & Y_{L22} & -Y_{L32} \\ -Y_{L13} & -Y_{L23} & Y_{L33} \end{bmatrix} \quad (2)$$

The total admittance of the transmission line 1 is, therefore, expressed by equation (3)

$$Y = YC + YL \quad (3)$$

Since the characteristics of the admittance matrices YC and YL, represented by the equations (1) and (2), are different, by suitably choosing the value of YL, the mutual admittance can be made zero, i.e. the distributed electrostatic capacity between the lines can be reduced to zero. In other words, by making the line impedance equal to infinity, the induced currents are reduced to zero and secondary arc extinction is, therefore, possible.

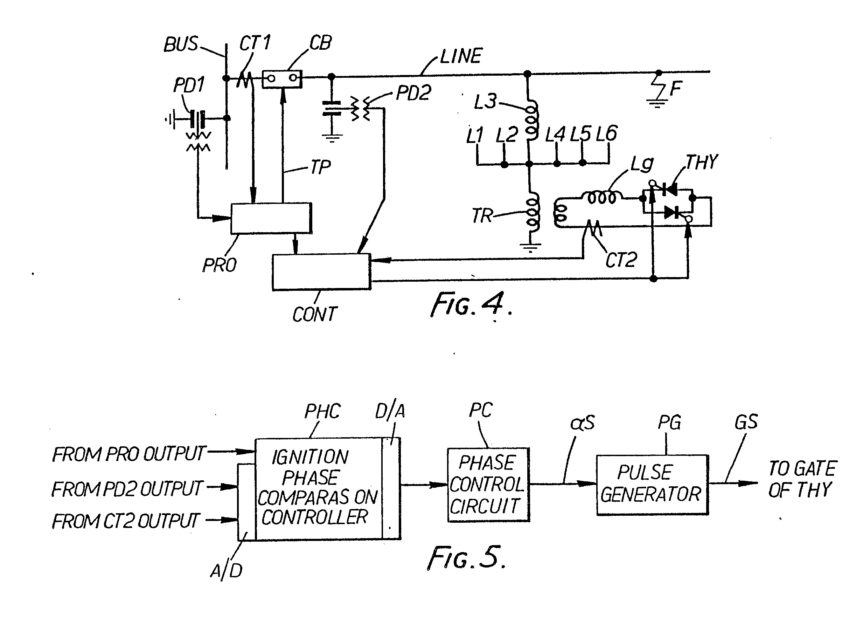

However, an extinction reactor, as described above, cannot reduce the electrostatic admittance to zero for the uninterrupted lines in the case of a multiphase transmission system having two conductors per phase. To deal with this case, investigations of an extinction reactor device of the form shown in Figure 3 have been made. As shown in Figure 3, an extinction reactor device 8 is of the form in which one end of reactors $L_1$, $L_2$ and $L_3$ is connected one to each of the phases of the transmission line, while one end of reactors $L_4$, $L_5$ and $L_6$ are connected to the respective phases of the other conductors and the ends of the six reactors $L_1$—$L_6$ are connected in common and a neutral point reactor $L_g$ is connected between this common point and earth.

The arc extinction function of a reactor device, as shown in Figure 3, has an admittance matrix determined by the distributed electrostatic capacity of the transmission lines of the two circuits and it is expressed by equation (4).

$$Y_c = \begin{bmatrix} Y_{C11} & -Y_{C21} & -Y_{C31} & -Y_{C41} & -Y_{C51} & -Y_{C61} \\ -Y_{C12} & -Y_{C22} & \ldots & \ldots & \ldots & -Y_{C62} \\ -Y_{C13} & \ldots & Y_{C33} & \ldots & \ldots & -Y_{C63} \\ -Y_{C14} & \ldots & \ldots & Y_{C44} & \ldots & -Y_{C64} \\ -Y_{C15} & \ldots & \ldots & \ldots & Y_{C55} & -Y_{C65} \\ -Y_{C16} & \ldots & \ldots & \ldots & \ldots & Y_{C66} \end{bmatrix} \quad (4)$$

The admittance matrix of the extinction reactor device 8 is expressed by equation (5).

$$Y_L = \begin{bmatrix} Y_{L11} & -Y_{L21} & -Y_{L31} & -Y_{L41} & -Y_{L51} & -Y_{L61} \\ -Y_{L12} & Y_{L22} & \ldots & \ldots & \ldots & -Y_{L62} \\ -Y_{L13} & \ldots & Y_{L33} & \ldots & \ldots & -Y_{L63} \\ -Y_{L14} & \ldots & \ldots & Y_{L44} & \ldots & -Y_{L64} \\ -Y_{L15} & \ldots & \ldots & \ldots & Y_{L55} & -Y_{L65} \\ -Y_{L16} & \ldots & \ldots & \ldots & \ldots & Y_{L66} \end{bmatrix} \quad (5)$$

The total admittance of the two conductor three phase transmission line is, therefore, expressed in the same way as equation (3) given above and, by suitably choosing the value of YL, extinction of secondary arcing can be achieved. In choosing the value of the admittance YL, as described, either the value of YL may be made a constant value found by means of the admittance due to the distributed electrostatic capacity, or it may be set to a calculated value.

However, the admittance due to the distributed electrostatic capacity varies depending on the phase on which the fault occurs and appreciable errors are unavoidable in the calculation of the line constant which forms the reference value for the setting of the optimum admittance by calculation. Furthermore, due to the effects of weather conditions, a particular value of YL is not always the optimum value. It is, therefore, difficult to obtain extinction of the secondary arc in a short time and the value of YL may vary above and below the optimum value. For these reasons, the extinction of the secondary arc is often difficult.

U.S. Patent Specification No. 2824978 describes an electric power system including a multiphase transmission line with circuit breakers at each end of each phase conductor so that the phase conductor can be isolated from the system in the case of an earth fault while the other phases remain connected to the system. In order to extinguish a secondary arc which occurs between one phase conductor and earth, the faulted conductor is isolated by the circuit breakers and reactors L₁ and L₂ are provided which compensate for the capacitance which exists between the faulted phase conductor and the other conductors. The arrangement of the reactors is such that three reactors each have a terminal connected to a respective phase conductor and the other terminal connected to a common point and another reactor is connected between this common point and earth. The specification also discloses that the reactors can be provided with special control windings which influence their main field in such a way that the density of the field lines is changed dependent on the state of the line. In this way, the active inductance of the reactors can be changed so that compensation of the line capacitance and, thus, extinction of the secondary arc can take place when a fault occurs on the line.

In U.S. Patent Specification No. 2050082, a circuit suppressing the ground current in the case of an earth-fault in an three-phase electric system is described. The suppressing means includes a variable reactance in the form of a transformer and another inductor reactance. The primary winding of the transformer is connected between neutral and ground. The other inductor reactance is included in the secondary circuit of the transformer.

A third reference entitled "Soviet Inventions Illustrated" of 30th September, 1980 gives an Abstract of Soviet Patent Application No. 702447. In this reference, there is a circuit for use with a multiphase transmission line which includes an arc extinguishing transformer which has its secondary winding connected to reactors in series with a semiconductor switching element which includes thyristors connected in anti-parallel relation to each other. The thyristors are controlled by a control circuit according to the conditions of the electrical power system.

The present invention is characterised over the disclosure of U.S. Specification No. 2824978 in that the variable reactance means comprises a transformer having a primary winding and a secondary winding which is connected in series

3

with a reactor and a thyristor switching element, the primary winding of the transformer being connected electrically in series with first reactance means; and that control means includes an ignition phase comparison control device (PHC) arranged to receive signals responsive to the voltage of the phase conductor and to the current in the secondary winding of the transformer and, when a secondary arc is detected, to supply a signal to a phase control circuit for controlling the firing angle of the thyristor switching element in response to said voltage and current signals.

In order that the invention may be more readily understood, it will now be described, by way of example only, with reference to Figures 4, 5 and 6 of the accompanying drawings, in which:—

Figure 1 shows a conventional power transmission line with a flashover to earth from one of the phases;

Figures 2 and 3 show conventional power transmission lines provided with reactors to cancel the electrostatic capacity between the lines;

Figure 4 is a diagram showing one embodiment of the invention;

Figure 5 is a block diagram showing the internal structure of an ignition angle controller shown in Figure 4; and

Figure 6 is a flow chart showing the operation of the secondary arc extinction apparatus of this invention.

In Figure 4, reference LINE represents one conductor of a two conductor per phase multiphase transmission line. Each conductor is connected through a circuit breaker at each end to a bus bar BUS. $L_1$—$L_6$ are reactors which are connected one to each of respective conductors of the transmission line and corresponding ends of the reactors are connected together. The primary winding of a step-down transformer TR is connected between the common point and ground. A neutral point reactor $L_g$ and a thyristor assembly THY are connected in series with the secondary winding of this transformer TR. The reactance (admittance) of the neutral point reactor $L_g$ is continuously variable by controlling the ignition angle of the thyristor assembly THY. PRO is a protective relay into which inputs are provided from a current transformer $CT_1$ provided in the transmission line and the voltage from a potential transformer $PD_1$ connected to the bus bar. This protective relay PRO is actuated when it detects a fault in the transmission line and delivers a trip pulse TP to the appropriate circuit breaker CB. CONT is an ignition angle controller which commences to operate when it receives an actuation output from the protective relay PRO and to which inputs are received from a potential transformer $PD_2$ connected to the conductor of the transmission line and from a current transformer $CT_2$ provided in the secondary circuit of the transformer TR. When its operation is started by means of the actuation output of the protective relay PRO, this ignition angle controller CONT converts the voltage and current signals which are inputted from the potential transformer $PD_2$ and the current transformer $CT_2$ into a DC level, and the ignition angle of the thyristor assembly THY is controlled by ascertaining this level. The thyristor assembly THY comprises two thyristors connected in anti-parallel relation.

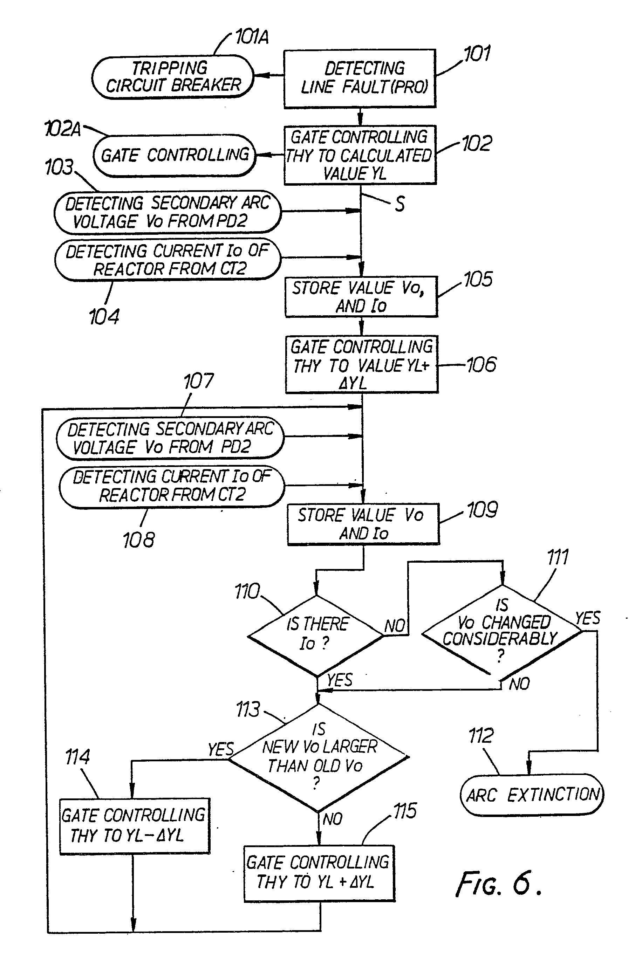

Referring to Figure 5, the ignition angle controller CONT is shown in block form. PHC is an ignition phase comparison controller to which are inputted as a start command the actuation of the protective relay PRO and through an analog/digital converter A/D the output of the potential transformer $PD_2$ and the output of the current transformer $CT_2$. This phase comparison controller PHC is in the form of a discriminator which contains a memory device such as a central processing unit CPU.

PC is a phase control circuit to which is applied the output obtained through a digital/analog converter D/A which is provided in the output stage of the ignition phase comparison controller PHC. PG is a pulse generator to which is applied the output αS of this phase control circuit PC and which supplies a gate signal GS to the thyristor assembly THY.

The operation of the secondary arc extinguisher as described above will now be explained.

Referring to Figure 4, when a fault occurs on one of the conductors of the transmission line, the transmission line protecting relay PRO detects the fault occurrence, fault phase and fault mode (box 101 in Figure 6) and supplies this information as a digital signal to the ignition phase comparison controller PHC of the ignition angle controller CONT shown in Figure 5. This ignition phase comparison controller PHC applies an analog output corresponding to the fault to the phase control circuit PC. The circuit PC converts the level of the analog quantity into a voltage level corresponding to the ignition angle α and supplies this to the pulse generator PG. A generator sends the gate pulses that are necessary for thyristor ignition at the phase of the ignition angle α so that, in the first instance, the reactance of the neutral point reactor $L_g$ is controlled to the value calculated as optimum for secondary arc extinction (box 102).

Now, in some cases, as mentioned earlier, due to errors in the determination of the transmission line constant, or to weather conditions, the secondary arc may not be extinguished. The arc voltage is, therefore, detected by the potential transformer $PD_2$ connected to the transmission line and sent to the ignition angle phase comparator PHC which is provided with a discriminator such as a CPU in the form of a high speed digital signal obtained by the A/D converter.

The neutral point reactor current (box 104) detected by the current transformer $CT_2$ is converted to a high speed digital signal by the A/D converter and sent to the ignition phase comparison controller PHC.

After the controller PHC as outputted a gate signal to the thyristor assembly THY, both the arc voltage detection signal and the neutral point reactor current detected signal are inputted and stored to the controller PHC. When the output $I_0$ of the current transformer $CT_2$ exists, in other words, when the output $I_0$ is not zero, the voltage $V_0$ from $PD_2$ is compared with a previous value of voltage $V_0$ which was detected when the fault occurred. As a result of the comparison, the ignition angle phase controller carries out a control operation whereby it delivers an output of a level which is lower or higher than the analog level which was produced before. This analog quantity is converted to an ignition angle $\alpha 1$ by the phase circuit PC and the gate control is carried out by the pulse generator PG to alter the reactance of the neutral point reactor $L_g$ by an amount $\Delta L$. The secondary arc voltage is thereby altered by an amount $\Delta V$.

When the reactance of the neutral point reactor $L_g$ is altered by an amount $\Delta L$, the new arc voltage level which is subsequently inputted to the analog/digital converter A/D is compared with the previous voltage level and, if the voltage level is lower, the ignition angle controller PHC outputs an analog level signal that is even lower (or even higher) than the digital analog converter D/A (box 115).

On the other hand, if the new arc voltage level is higher than the preceding arc voltage level, then the ignition angle controller PHC outputs an analog level signal that is $\Delta V$ higher (or lower) than the analog level that was outputted previously (box 114). The reactance of the neutral point reactor $L_g$ is, therefore, changed by $\Delta L$.

This process is repeated, changing the angle of ignition while applying a feedback such that the secondary arc voltage is a minimum and changing the reactance of the neutral point reactor $L_g$ while comparing with the previous arc voltage. Soon as the secondary arc voltage reaches zero, or its minimum, whereupon this arc voltage changes considerably (box 111) and the current level of the neutral point reactor $L_g$ becomes zero. The secondary arc is thus extinguished (box 112) and reclosing of the transmission line becomes possible.

The above explanation concerns the case of an independent secondary arc extinguisher. However, with the high voltage transmission lines of recent years, the same object can be achieved by providing the said device at the neutral point of the reactor portion of the reactive power compensator that is connected to the transmission line for transmission stabilisation.

As explained, above, according to this invention, there is provided a secondary arc extinguisher for high voltage, high capacity transmission lines whereby, whatever the conditions (including errors in the transmission line constant), control can be achieved to a mutual admittance which is optimum for secondary arc extinction, ensuring secondary arc extinction in a short time and making the period of time during which the conductor is disconnected from the supply much shorter and this is advantageous in electrical power systems.

Thus, although the invention has been explained by way of example of one unit control for controlling the neutral point reactor $TR-L_g$, it should be apparent that phase control for individually controlling phase reactors $L_1—L_6$ could be employed.

That is to say, the transformer TR is replaced by a fixed neutral point reactor $L_g$ and a variable reactance device including the transformer TR, a reactor, the thyristor assembly THY, and current transformer $CT_2$ is respectively connected between the line LINE and the fixed neutral point reactor $L_g$, instead of each phase reactor $L_1—L_6$.

Potential transformers $PD_2$ connected to each phase are connected with respective ignition angle controllers CONT.

**Claims**

1. Secondary arc extinction apparatus for use with an electric power system which includes a multiphase transmission line and means for disconnecting each phase conductor (LINE) from the power system, said apparatus comprising for each phase conductor (LINE)

a first reactance means ($L_1—L_6$) and a second reactance means connected electrically in series between the respective phase conductor and earth;

means (PRO) for detecting the presence of a secondary arc between one phase conductor (LINE) of the line and earth; and

control means (CONT) for controlling the reactance of the secondary reactance means to thereby extinguish said secondary arc; characterised in that

the second reactance means comprises a transformer (TR) having a primary winding and a secondary winding which is connected in series with a reactor (LG) and a thyristor switching element (THY), the primary winding of the transformer (TR) being connected electrically in series with the first reactance means ($L_1—L_6$), and that the control means (CONT) includes an ignition phase comparison control device (PHC) arranged to receive signals responsive to the voltage of the phase conductor (LINE) and to the current in the secondary winding of the transformer (TR) and, when a secondary arc is detected, to supply a signal to a phase control circuit (PC) for controlling the firing angle of the thyristor switching element (THY) in response to said voltage and current signals.

2. Secondary arc extinction apparatus as claimed in claim 1, characterised in that the ignition phase comparison control device (PHC) initially supplies a signal to said phase control circuit (PC) which causes the firing angle of the thyristor switching element (THY) to be adjusted to a predetermined level and thereafter the ignition phase comparison control device (PHC), in response to said voltage and current signals, modifies the signal supplied to the phase control circuit (PC) to adjust the firing angle of the thyristor switching element (THY) in the sense to extinguish the secondary arc.

3. Secondary arc extinction apparatus as claimed in claim 2, characterised in that said ignition phase comparison control device (PHC) includes a memory device in which the signals responsive to the voltage of the phase conductor (LINE) and the current in the secondary winding of the transformer (TR) are stored and periodically compared with incoming corresponding signals.

**Patentansprüche**

1. Sekundärlichtbogenlöscheinrichtung für einen elektrischen Stromkreis, der eine Mehrphasen-Hochspannungsleitung und Mittel zum Trennen jedes Phasenleiters vom Stromkreis aufweist, wobei die Sekundärlichtbogenlöscheinrichtung für jeden Phasenleiter einen ersten induktiven Widerstand ($L_1$—$L_6$) und einen zweiten induktiven Widerstand aufweist, die in Reihe zwischen den Phasenleiter und Erde geschaltet sind, ferner Mittel (PRO) zum Feststellen des Vorhandenseins eines Sekundärlichtbogens zwischen einem Phasenleiter der Hochspannungsleitung und Erde, und Steuermittel (CONT) zum Steuern des zweiten induktiven Widerstandes zum Löschen des Sekundärlichtbogens, dadurch gekennzeichnet, daß der zweite induktive Widerstand einen Transformator (TR) aufweist mit einer Primärwicklung und einer Sekundärwicklung, welche in Reihe mit einer Induktivität (LG) und einem Thyristorschalter (THY) geschaltet ist, daß die Primärwicklung des Transformators (TR) in Reihe mit dem ersten induktiven Widerstand ($L_1$—$L_6$) geschaltet ist und daß die Steuermittel (CONT) eine Zündungsphasenvergleichssteuereinrichtung (PHC) aufweisen, die von der Spannung des Phasenleiters und von dem Strom in der Sekundärwicklung des Transformators (TR) abhängige Signale aufnimmt und die, wenn ein Sekundärlichtbogen auftritt, in Abhängigkeit von den Spannungs- und Stromsignalen ein Signal einem Phasensteuerkreis (PC) zuführt zur Steuerung des Zündwinkels des Thyristorschalters (THY).

2. Sekundärlichtbogenlöscheinrichtung nach Anspruch 1, dadurch gekennzeichnet, daß die Zündungsphasenvergleichssteuereinrichtung (PHC) anfänglich ein Signal dem Phasensteuerkreis (PC) zuführt, der den Zündungswinkel des Thyristorschalters (THY) auf einen vorbestimmten Wert einstellt und daß danach die Zündungsphasenvergleichssteuereinrichtung (PHC) in Abhängigkeit von den Spannungs- und Stromsignalen das dem Phasensteuerkreis (PC) zugeführte Signal modifiziert zum Einstellen des Zündungswinkels des Thyristorschalters (THY), derart, daß der Sekundärlichtbogen gelöscht wird.

3. Sekundärlichtbogenlöscheinrichtung nach Anspruch 2, dadurch gekennzeichnet, daß die Zündphasenvergleichssteuereinrichtung (PHC) einen Speicher aufweist, in dem die von der Spannung des Phasenleiters und dem Strom in der Sekundärwicklung des Transformators (TR) abhängigen Signal gespeichert werden und periodisch mit einlaufenden entsprechenden Signalen verglichen werden.

**Revendications**

1. Appareil d'extinction d'arc secondaire pour utilisation avec un système de puissance électrique comprenant une ligne de transmission multiphase et des moyens pour déconnecter chaque conducteur de phase (LIGNE) du système de puissance, cet appareil comprenant, pour chaque conducteur de phase (LIGNE), un premier moyen de réactance $L_1$—$L_6$ et un second moyen de réactance connectés électriquement en série entre le conducteur de phase respectif et la terre; des moyens (PRO) pour détecter la présence d'un arc secondaire entre un conducteur de phase (LIGNE) de la ligne et la terre; et un moyen de commande (CONT) pour commander la réactance du moyen de réactance secondaire, de manière à éteindre ledit arc secondaire; caractérisé en ce que le second moyen de réactance comprend un transformateur (TR) ayant un enroulement primaire et un enroulement secondaire qui est connecté en série avec un réacteur (LG) et un élément de commutation à thyristor (THY), l'enroulement primaire du transformateur (TR) étant connecté électriquement, en série, avec le premier moyen de réactance (L1—L6), et en ce que le moyen de commande inclut un dispositif de commande à comparaison de phase d'allumage (PHC) agencé pour recevoir des signaux en réponse à la tension du conducteur de phase (LIGNE) et au courant dans l'enroulement secondaire du transformateur (TR), lorsqu'un arc secondaire est détecté, de façon à fournir un signal à un circuit de commande de phase (PC) pour commander l'angle d'allumage de l'élément de commutation à thyristor (THY) en réponse auxdits signaux de tension et de courant.

2. Appareil d'extinction d'arc secondaire comme revendiqué dans la revendication 1, caractérisé en ce que le dispositif de commande à comparaison de phase d'allumage (PHC) fournit initialement un signal audit circuit de commande de phase (PC), ce qui provoque le réglage de l'angle d'allumage de l'élément de commutation à thyristor (THY) à un niveau prédéterminé et, ensuite, le dispositif de commande à comparaison de phase d'allumage (PHC) modifie, en réponse auxdits signaux de tension et de courant, le signal fourni au circuit de commande de phase (PC) de façon à régler l'angle d'allumage de l'élément de commutation à thyristor (THY) dans le sens de l'extinction de l'arc secondaire.

3. Appareil d'extinction d'arc secondaire comme revendiqué dans la revendication 2, caractérisé en ce que ledit dispositif de commande à comparaison de phase d'allumage (PHC) inclut un dispositif de mémoire dans lequel les signaux correspondant à la tension du conducteur de phase (LIGNE) et au courant dans l'enroulement secondaire du transformateur (TR) sont mis en mémoire et périodiquement comparés avec les signaux correspondants qui arrivent.

*Fig. 1.*
PRIOR ART

*Fig. 2.*
PRIOR ART

*Fig. 3.*
PRIOR ART

BUS CT1 CB LINE

PD1

PD2

F

L3

L1 L2 L4 L5 L6

TP

Lg THY

TR

PRO

CT2

CONT

*Fig. 4.*

0 067 620

FROM PRO OUTPUT → 

FROM PD2 OUTPUT →

FROM CT2 OUTPUT →

PHC | D/A

IGNITION
PHASE
COMPARAS ON
CONTROLLER

A/D

PC

PHASE
CONTROL
CIRCUIT

αS

PG

PULSE
GENERATOR

GS

TO GATE
OF THY

*Fig. 5.*

*Fig. 6.*